# EUROPÄISCHE PATENTSCHRIFT

(11) **EP 2 817 250 B1**
(45) Veröffentlichungstag und Bekanntmachung des Hinweises auf die Patenterteilung: **07.04.2021**
(21) Anmeldenummer: 13708668.2
(22) Anmeldetag: 12.02.2013
(51) Int. Cl.: B65G 49/04, B05C 3/10

(54) **TAUCHBEHANDLUNGSANLAGE**
IMMERSION TREATMENT INSTALLATION
INSTALLATION DE TRAITEMENT PAR IMMERSION

(30) Priorität: 21.02.2012 DE 102012003271
(43) Veröffentlichungstag der Anmeldung: 31.12.2014
(73) Patentinhaber: Eisenmann SE, 71032 Böblingen (DE)
(72) Erfinder: ROBBIN, Jörg, 72119 Ammerbuch-Pfäffingen (DE)
(74) Vertreter: Ostertag & Partner Patentanwälte mbB
(86) Internationale Anmeldenummer: PCT/EP2013/000401
(87) Internationale Veröffentlichungsnummer: WO 2013/124039

(56) Entgegenhaltungen:
- WO-A1-2012/113506
- DE-A1-102010 012 534
- DE-C2- 19 641 048

## Beschreibung

Die Erfindung betrifft eine Tauchbehandlungsanlage mit
a) mindestens einem Tauchbecken, welches mit einer Behandlungsflüssigkeit, insbesondere Lack, füllbar ist, in welche die zu behandelnden Gegenstände, insbesondere Fahrzeugkarosserien, eingetaucht werden können;
b) einem Fördersystem, welches die zu behandelnden Gegenstände an das Tauchbecken heran, in den Innenraum des Tauchbeckens hinein, aus dem Tauchbecken heraus und von diesem wegbewegen kann und welches mindestens einen in einer Translationsrichtung bewegbaren Transportwagen umfasst, der eine um eine Drehachse verdrehbare Tragplattform aufweist, an der mit Hilfe einer Verbindungsstruktur mindestens ein Gegenstand befestigbar ist.

Bei Tauchbehandlungsanlagen, die mit einem einen oder mehrere Transportwagen aufweisenden Fördersystem arbeiten, das grundsätzlich kontinuierlich betrieben werden kann, stellt sich das grundlegende Problem, wie der zu behandelnde Gegenstand aus der Transportposition, in der er sich in einer Höhe über dem Spiegel der Behandlungsflüssigkeit befindet, so abgesenkt werden kann, dass er in die Behandlungsflüssigkeit vollständig eintaucht. Hierzu wurden verschiedene Lösungswege eingeschlagen:
Bei der in der DE 196 41 048 C2 beschriebenen Tauchlackieranlage ist das Fördersystem so ausgebildet, dass die zu behandelnden Gegenstände unter Überlagerung einer reinen Translationsbewegung und einer reinen Drehbewegung um eine senkrecht zur Transportrichtung ausgerichtete Achse in die Bäder eingetaucht und aus diesen wieder herausgehoben werden. Die Drehachse muss dabei verhältnismäßig weit außerhalb der Kontur der Fahrzeugkarosserie und damit weit von deren Schwerpunkt liegen. Bei Gegenständen, die ein erhebliches Gewicht aufweisen, werden hier sehr aufwendige Halterungsgestelle benötigt, da sehr große Kräfte entstehen. Außerdem ist nur eine einzige Kinematik beim Ein- und Austauchen der Gegenstände möglich. Schließlich benötigen derartige Tauchlackieranlagen in vertikaler Richtung verhältnismäßig viel Einbauraum.

Bei der aus der DE 101 03 837 B4 bekannten Tauchlackieranlage umfasst jeder Transportwagen einen Schwenkarm, der an einem Ende um eine mit dem Transportwagen verfahrende erste Drehachse verschwenkbar ist und am anderen Ende über eine zweite Drehachse die Befestigungseinrichtung trägt, an welcher der zu lackierende Gegenstand befestigt ist. Die Bewegung, mit welcher die Fahrzeugkarosserie hier in das Tauchbecken eintaucht, kann als Überlagerung zweier Drehbewegungen um die beiden genannten Drehachsen und einer translatorischen Linearbewegung in horizontaler Richtung verstanden werden. Ein Großteil der Vertikalbewegung wird dabei aus der Schwenkbewegung des Schwenkarmes erzeugt. Diese bekannte Tauchlackieranlage weist außerordentlich große Variabilität in den erzielbaren Bewegungskinematiken sowie hohe Flexibilität auf. Allerdings ist mit ihr ein gewisser apparativer Aufwand verbunden.

Eine Tauchbehandlungsanlage der eingangs genannten Art schließlich ist aus der DE 20 2008 017 770 bekannt.

Bei dieser ist die Tragplattform, an welcher die zu lackierende Fahrzeugkarosserie befestigbar ist, über einen Schlitten in vertikaler Richtung verfahrbar. Die Gesamtbewegung lässt sich hier als Überlagerung einer linearen Bewegung in Translationsrichtung, einer linearen Bewegung in Vertikalrichtung und einer Drehbewegung um die Drehachse verstehen. Die Vertikalbewegung erfolgt motorisch; die Verbindungsstruktur zwischen Gegenstand und Tragplattform ist in sich starr.

Aufgabe der vorliegenden Erfindung ist es, eine Tauchbehandlungsanlage der eingangs genannten Art so auszugestalten, dass sie einfacher und preiswerter im Aufbau ist und einen geringeren regelungstechnischen Aufwand benötigt.

Diese Aufgabe wird erfindungsgemäß dadurch gelöst, dass
c) die Verbindungsstruktur so in sich beweglich ist, dass der Gegenstand eine erste, ausgetauchte Position besitzt, in welcher er einen geringst möglichen vertikalen Abstand von der Drehachse besitzt, und dass bei einer Verdrehung aus dieser ersten Position unter dem Einfluss der Schwerkraft ohne zusätzliche motorische Einwirkung zunehmend eine Vergrößerung des vertikalen Abstandes zwischen Gegenstand und Drehachse stattfindet, und dass
d) der Transportwagen eine durch einen Elektromotor drehbare Antriebsrolle aufweist.

Die Erfindung verabschiedet sich von dem bisher durchgängigen Konzept, die zum Eintauchen erforderliche Vertikalkomponente der Bewegung durch eine entsprechende, motorisch betriebene Bewegung der Tragplattform zu bewirken. Stattdessen hält die vorliegende Erfindung die vertikale Position der Drehachse der Tragplattform konstant und macht stattdessen die Verbindungsstruktur zwischen Tragplattform und Gegenstand in sich beweglich. In der aufgetauchten Position sorgt die Schwerkraft dafür, dass sich die Verbindungsstruktur zusammenfaltet und ihre Abmessung in vertikaler Richtung so klein wie möglich ist. Bei einer Verdrehung dagegen beginnt die Schwerkraft die Verbindungsstruktur auseinander zu ziehen, ohne dass dabei eine motorische Einwirkung erforderlich ist. Auch ein steuerungstechnischer Aufwand entfällt vollständig. Die Vertikalbewegung des Gegenstandes fällt gewissermaßen als "Nebenprodukt" der Drehbewegung automatisch an.

Vorteilhaft ist, wenn der Gegenstand nach einer Verdrehung um 180° eine zweite Position erreicht, in welcher er einen maximalen vertikalen Abstand von der Drehachse besitzt.

Bei einer besonders bevorzugten Ausführungsform der Erfindung umfasst die Verbindungsstruktur mindestens zwei parallele, mit einem ersten Ende gelenkig mit der Tragplattform verbundene Lenker, die an ihren zweiten Enden gelenkig mit einer Haltestruktur für den Gegenstand so verbunden sind, dass sich mindestens eine Parallelogrammführung ergibt. Bei dieser Ausgestaltung legt sich das aus Tragplattform, Lenkern und Haltestruktur gebildete Parallelogramm in der ausgetauchten Stellung extrem flach, während es in der zweiten Position nach einer Verdrehung um 180° zum Rechteck wird und so den Abstand zwischen Tragplattform und Haltestruktur und damit Gegenstand maximiert.

Eine alternative Ausführungsform dieses Gedankens sieht so aus, dass der Gegenstand von einem ein Grundgerüst aufweisenden Skid getragen ist, wobei die Verbindungsstruktur mindestens zwei parallele mit einem ersten Ende gelenkig mit dem Grundgerüst des Skids verbundene Lenker umfasst, die an ihren zweiten Enden gelenkig mit einer Haltestruktur für den Gegenstand so verbunden sind, dass sich mindestens eine Parallelogrammführung ergibt. Die Fähigkeit zur Vertikalbewegung ist hier also nicht dem Transportwagen selbst immanent, sondern dem Skid, welcher den Gegenstand durch die gesamte Anlage (und gegebenenfalls in weitere Anlagenteile der Automobilfertigung) trägt.

In manchen Fällen ist es von Vorteil, wenn eine Dämpfungs- oder Bremseinrichtung vorhanden ist, welche die inneren Bewegungen der Verbindungsstruktur, die unter dem Einfluss der Schwerkraft ablaufen, kontrolliert. Auf diese Weise sollen ruckartige Bewegungen vermieden werden.

Ausführungsbeispiele der Erfindung werden nachstehend anhand der Zeichnung näher erläutert; es zeigen
- Figur 1: einen Ausschnitt einer kataphoretischen Tauchbelackieranlage in Seitenansicht;
- Figur 2: als Vergrößerung aus Figur 1 einen Transportwagen mit einer Fahrzeugkarosserie in einer ersten Position vor dem Eintauchen;
- Figur 3: eine Ansicht, ähnlich der Figur 2, in welcher jedoch die Fahrzeugkarosserie um 90° verdreht ist;
- Figur 4: eine Ansicht, ähnlich den Figuren 2 und 3, in welcher jedoch die Fahrzeugkarosserie gegenüber der Ausgangslage um 135° verdreht ist;
- Figur 5: eine Ansicht, ähnlich den Figuren 2, 3 und 4, in welcher die Fahrzeugkarosserie aus der Ausgangsposition um einen Winkel von 180° verdreht ist;
- Figur 6: einen Schnitt gemäß Linie VI-VI von Figur 1;
- Figur 7: einen Transportwagen für eine Fahrzeugkarosserie, wie er in der Tauchlackieranlage der Figuren 1 bis 5 eingesetzt wird, und zwar in einer Zwischenposition vor dem Rücktransport;
- Figur 8: die Seitenansicht des Transportwagens der Figur 7 in der zum Rücktransport eingenommenen Position;
- Figur 9: eine Seitenansicht, ähnlich der Figur 5, eines alternativen Ausführungsbeispiels eines mit einer Fahrzeugkarosserie beladenen Transportwagens.

Die nachfolgend anhand der verschiedenen Figuren beschriebene kataphoretische Tauchlackieranlage, die insgesamt mit dem Bezugszeichen 1 gekennzeichnet ist, ist in ihrem grundsätzlichen Aufbau aus der DE 20 2008 017 770, dort insbesondere aus den Figuren 21 bis 38, bekannt. Auf diese Druckschrift wird ergänzend Bezug genommen. Soweit nachfolgend nichts anderes beschrieben ist, stimmt die Bauweise der vorliegenden kataphoretischen Tauchlackieranlage 1 mit der bekannten überein. Die entsprechenden baulichen Merkmale werden kurz wie folgt zusammengefasst:
Die kataphoretische Tauchlackieranlage 1 umfasst ein mit flüssigem Lack gefülltes Tauchbecken 2. Fahrzeugkarosserien 3 werden mit Hilfe eines Fördersystemes 4 durch die Tauchlackieranlage 1 und insbesondere durch das Tauchbecken 2 und den darin befindlichen Lack geführt. Entlang des Bewegungsweges der Fahrzeugkarosserien 3 sind Anoden angeordnet, die aus Übersichtlichkeitsgründen nicht dargestellt sind. In einem elektrischen Feld, das sich zwischen den Fahrzeugkarosserien 3 und den Anoden ausbildet, wandern Farbpartikel auf die Fahrzeugkarosserien 3 zu und werden an diesen abgeschieden.

Das Fördersystem 4 umfasst eine Mehrzahl von Transportwagen 5, die weiter unten näher beschrieben werden. Über dem Tauchbecken 2 erstreckt sich eine Antriebsschiene 6 mit einem I-Profil, wie sie bei herkömmlichen Hängebahnen eingesetzt wird.

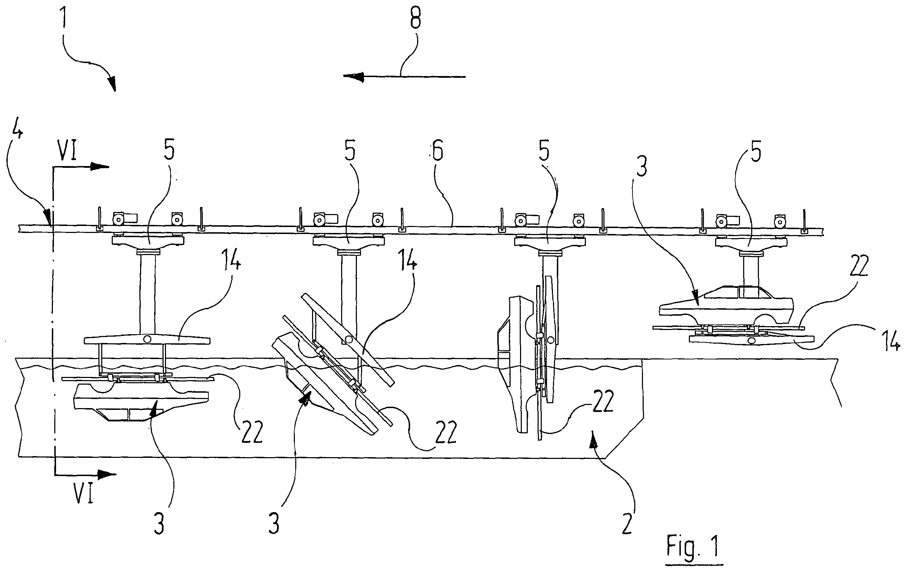

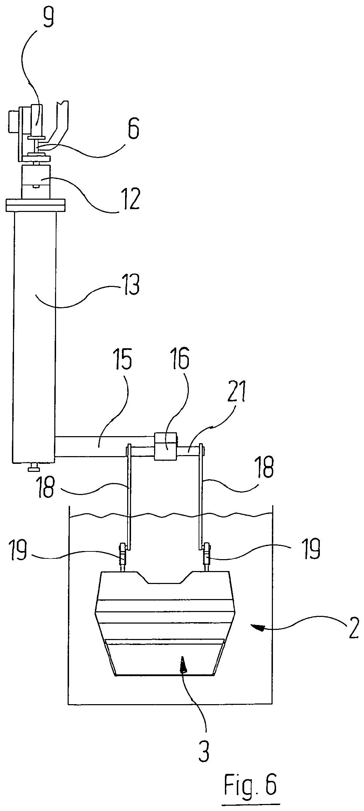

Die Bewegungsrichtung, in welcher die Fahrzeugkarosserien 3 mit Hilfe des Fördersystemes 4 gefördert werden, ist in Figur 1 durch einen Pfeil 8 dargestellt. Die Antriebsschiene 6 ist bezogen auf die Mitte des Tauchbeckens 2 in Richtung senkrecht zur Bewegungsrichtung 8 nach außen versetzt, so dass sie nicht oberhalb des Tauchbeckens 2 verläuft. Dies ist insbesondere auch der Figur 6 zu entnehmen.

Bei den Transportwagen 5 handelt es sich im Grundsatz um eine Konstruktion, die von herkömmlichen Elektrohängebahnen her bekannt ist. Jeder dieser Transportwagen 5 besitzt ein in Bewegungsrichtung 8 vorauseilendes Fahrwerk 9, welches in der Fachsprache "Vorläufer" genannt wird, sowie ein in Bewegungsrichtung 8 nacheilendes weiteres Fahrwerk 10, welches in der Fachsprache "Nachläufer" genannt wird. Vorläufer 9 und Nachläufer 10 sind in bekannter Weise mit Führungs- und Tragrollen ausgestattet, die hier nicht eigens mit Bezugszeichen versehen sind und an verschiedenen Flächen des I-förmigen Profils der Antriebsschiene 6 abrollen. Mindestens eine Rolle des Vorläufers 9 bzw. des Nachläufers 10, im vorliegenden Falle eine Rolle des Vorläufers 9, dient als Antriebsrolle und ist hierzu durch einen Elektromotor 11 drehbar.

Vorläufer 9 und Nachläufer 10 jedes Transportwagens 5 sind durch eine Traverse 12 miteinander verbunden. Die Traverse 12 ihrerseits steht über ein im Wesentlichen vertikal verlaufendes Halteelement 13 mit einer Tragplattform 14 in Verbindung. Die Tragplattform 14 wird an dem Halteelement 13 durch eine eine Drehachse definierende Drehwelle 15 freitragend gehalten, die im unteren Bereich des Halteelements 13 gelagert ist. Sie wird an diesem Ende durch einen Drehantrieb in Drehung versetzt, der im Einzelnen nicht dargestellt ist und sich durch den Innenraum des hohlen Halteelements 13 erstreckt.

Die Anordnung ist also so, dass sich die Tragplattform 14 oberhalb des Tauchbeckens 2 befindet, während das Halteelement 13 ebenso wie die Antriebsschiene 6 seitlich des Tauchbeckens 2 angeordnet sind (vgl. Figur 6).

Das äußere Ende der Drehwelle 15 ist an einer Längstraverse 16 der Tragplattform 14 drehschlüssig befestigt. Die gegenüberliegenden Enden der Längstraverse 16 werden von zwei Haltestangen 17 durchstoßen, an deren gegenüberliegenden Enden jeweils ein Lenker 18 ebenfalls drehbar angelenkt ist (vgl. Figur 6). Die von den Haltestangen 17 entfernten Enden der Lenker 18 sind an einer Haltestruktur 19 ebenfalls gelenkig angebracht. Die Haltestruktur 19 umfasst zwei parallele Streben 20 (vgl. auch Figur 6), auf denen Befestigungselemente (nicht dargestellt) montiert sind, die in bekannter Weise der Befestigung eines eine Fahrzeugkarosserie 3 tragenden Skids 22 dienen.

Die Längstraverse 16 und die Streben 20 der Haltestruktur 19 verlaufen in der Seitenansicht parallel, ebenso wie die Lenker 18. Auf diese Weise entsteht durch die Längstraverse 16, die beiden Paare von Lenkern 18 und die Haltestruktur 19 eine doppelte Parallelogrammführung.

Die Funktionsweise der oben beschriebenen Tauchlackieranlage 1 ist wie folgt:

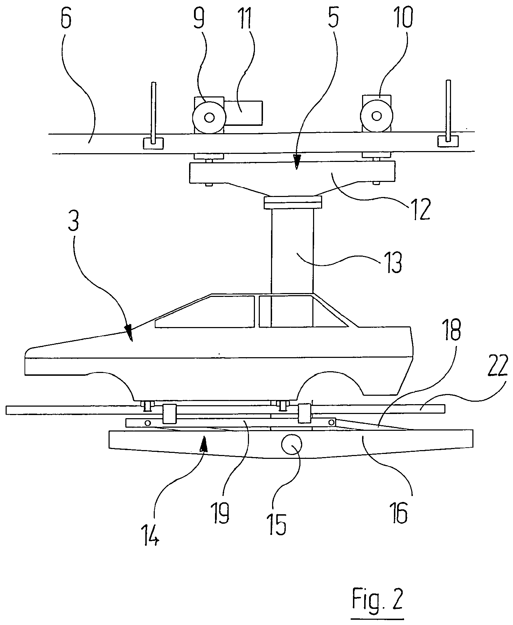

In Figur 2 ist diejenige Situation dargestellt, bevor die auf der Tragplattform 14 befstigte Fahrzeugkarosserie 3 in Transportrichtung 8 über das Becken 2 gefahren wird. In dieser Transportstellung sind die oben genannten Parallelogrammführungen "zusammengeklappt". Dies heißt, dass die Lenker 18 so verschwenkt sind, dass sie im Wesentlichen parallel zur Längstraverse 16 verlaufen. Die beiden Streben 20 der Haltestruktur 19 besitzen ein nur unwesentlich höheres Niveau als die Längstraverse 16.

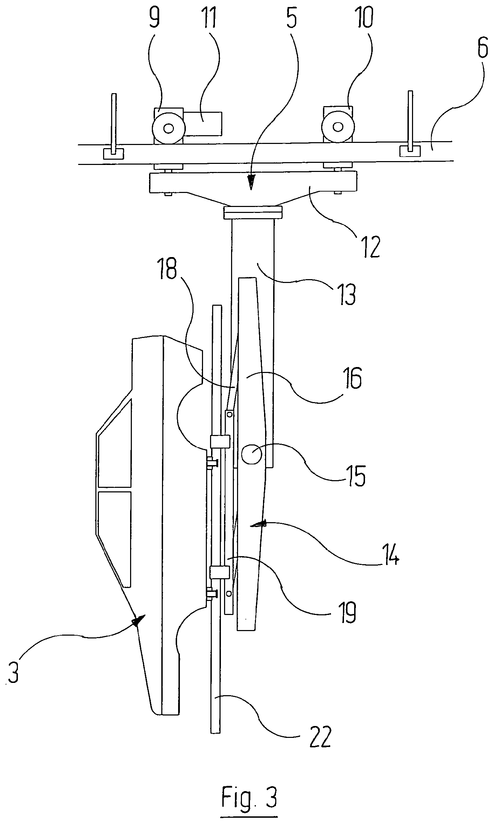

Bei der Weiterbewegung des Transportwagens 5 wird mit einer Drehung der Tragplattform 14 um die Drehachse der Drehwelle 15 begonnen. In Figur 3 ist diejenige Situation dargestellt, in welcher ein Drehwinkel von 90° erreicht ist. In dieser Position taucht die Fahrzeugkarosserie 3 nur in ihrem vorderen Bereich in den Innenraum des Tauchbeckens 2 ein. Die Haltestruktur 19 steht ebenso wie die Längstraverse 16 der Tragplattform 14 im Wesentlichen senkrecht, wobei beide Bauelemente nach wie vor in enger Nähe zueinander sind.

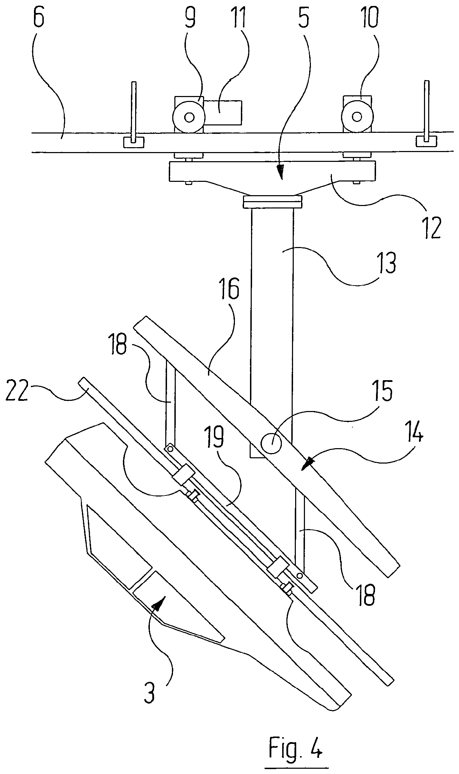

Wird nunmehr die Drehung weitergeführt, wie dies in Figur 4 für einen Winkel von 135° dargestellt ist, beginnen die Parallelogrammführungen an der Tragplattform 14 "aufzuklappen". Die Lenker 18 stehen nicht mehr parallel oder in spitzem Winkel zu der Längstraverse 16 und der Tragstruktur 19, sondern schließen mit diesen einen größeren Winkel ein. Dieser Vorgang ist damit verbunden, dass sich die Haltestruktur 19 in vertikaler Richtung von der Längstraverse 16 entfernt. Auch in dieser Position ist die Fahrzeugkarosserie 3 noch nicht vollständig in das Tauchbecken 2 eingetaucht.

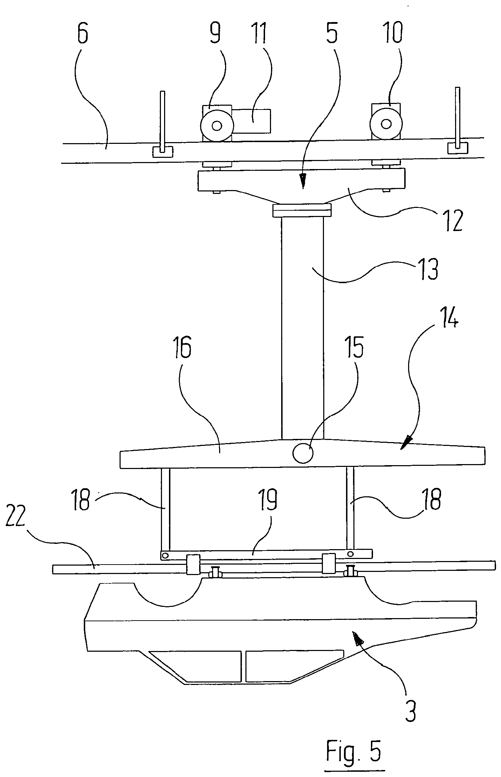

Bei Fortsetzung der Drehbewegung wird schließlich ein Drehwinkel von 180° erreicht, der in Figuren 5 und 6 gezeigt ist. In dieser Drehstellung verlaufen die Lenker 18 senkrecht sowohl zur Längstraverse 16 als auch zur Haltestruktur 19. Die Haltestruktur 19 hat nunmehr den größtmöglichen Abstand von der Längstraverse 16 erhalten. Die Parallelogrammführungen besitzen die Gestalt eines Rechtecks. Die Fahrzeugkarosserie 3 ist vollständig eingetaucht und liegt "auf dem Rücken".

All diese Vorgänge (mit Ausnahme natürlich der Drehbewegung, die motorisch durchgeführt wird) spielen sich ausschließlich unter dem Einfluss der Schwerkraft ab, benötigen also keinen zusätzlichen Antrieb. Allenfalls kann es sich empfehlen, eine Bremse oder einen Dämpfungsmechanismus vorzusehen, unter dessen Einfluss das "Aufklappen" der Parallelogrammführungen kontrolliert erfolgt.

Der Transportwagen 5 wird nunmehr weiter in Bewegungsrichtung 8 verfahren, wobei auch hin- und hergehende Schwenkbewegungen der Tragplattform 14 möglich sind. Am in Bewegungsrichtung hinteren Ende des Tauchbeckens 2 wird die Fahrzeugkarosserie 3 wieder durch eine Drehung um 180°, beispielsweise im entgegengesetzten Drehsinn, aus dem Tauchbecken 2 ausgetaucht. Die Parallelogrammführungen, die von der Längstraverse 16, den Lenkern 18 und der Haltestruktur 19 gebildet werden, "klappen" wieder zusammen; die Fahrzeugkarosserie 3 nimmt auf dem Transportwagen 5 wieder die in Figur 2 dargestellte Transportstellung ein und kann dann abtransportiert werden.

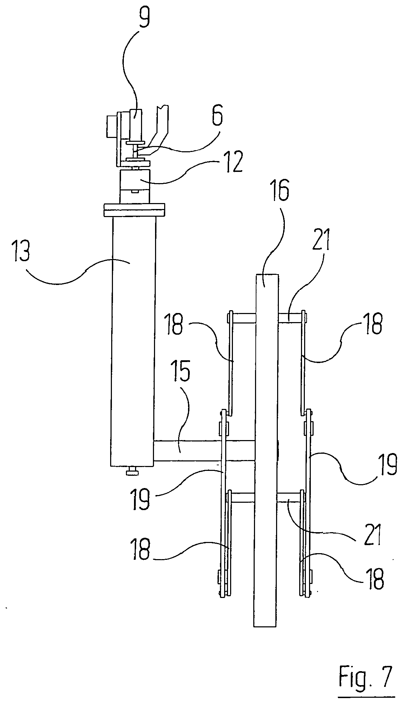

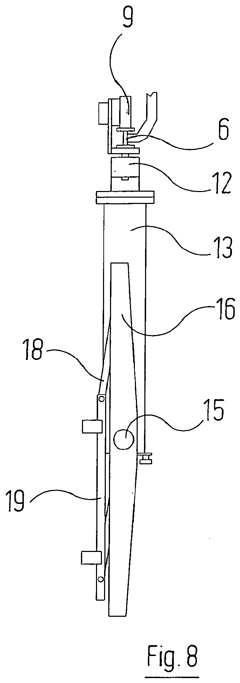

Am Ende des Fördersystemes 4 werden die Fahrzeugkarosserien 3 mit den Skids 22 von den Transportwagen 5 abgenommen. Zum Rücktransport des nunmehr leeren Transportwagens 5 wird die Tragplattform 14 mit Hilfe der Drehwelle 15 senkrecht gestellt, wie dies in Figur 7 gezeigt ist. Danach werden die gesamte Tragplattform 14, die Drehwelle 15 sowie das Halteteil 13 um eine senkrechte Achse gegenüber der Traverse 12 des Transportwagens 5 verdreht, so dass also die Drehwelle 15 im Wesentlichen parallel zur Antriebsschiene 6, unterhalb von dieser, zu liegen kommt. Der gesamte Transportwagen 5 nimmt dann, in Bewegungsrichtung gesehen (vgl. Figur 8) eine sehr schmale Dimension ein. Der Raumbedarf, der zum Rücktransport der leeren Transportwagen 5 von der Entladestation zur Beladestation erforderlich ist, ist daher sehr gering.

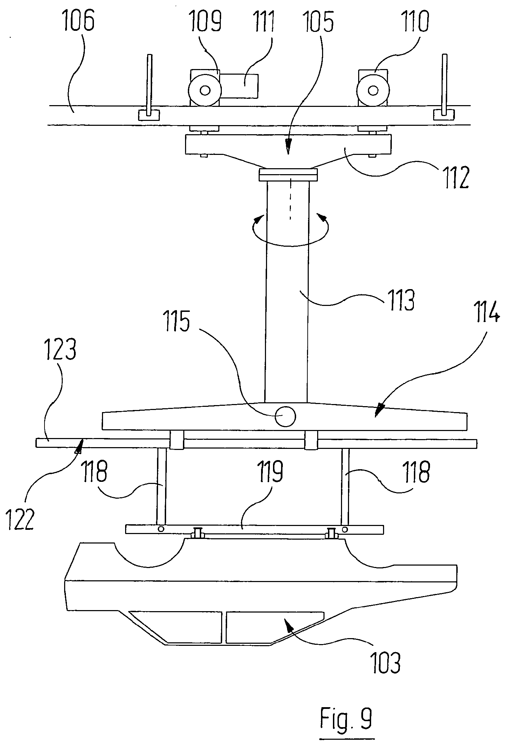

Beim oben beschriebenen Ausführungsbeispiel wurden die beiden Parallelogrammführungen durch die Längstraversen 16 der Tragplattform 14, die Lenker 18 sowie die Haltestruktur 19 gebildet. Der Skid 22, an dem die Fahrzeugkarosserie 3 befestigt ist, ist dort ein in sich starres Gebilde. Es ist jedoch auch möglich, in die Bildung dieser Parallelogrammführungen statt der Tragplattform 14 den Skid einzubeziehen. Dies ist schematisch in Figur 9 dargestellt. Soweit Komponenten der Figur 9 solchen der Figur 5 entsprechen sind sie mit demselben Bezugszeichen zuzüglich 100 gekennzeichnet.

Der Skid 122 besitzt ein Grundgerüst 123. Eine Haltestruktur 119 ist, ähnlich wie die Haltestruktur 19 des ersten Ausführungsbeispiels mit der Längstraverse 16 verbunden ist, über gelenkig angebrachte Lenker 118 mit dem Grundgerüst 123 des Skids 122 verbunden. An dieser Haltestruktur 119 ist die Fahrzeugkarosserie 103 festgelegt. Bei der Verdrehung der Tragplattform 114 klappt dann aus dem Grundgerüst 123 des Skids 122 die die Fahrzeugkarosserie 103 tragende Haltestruktur 119 heraus, wodurch ebenfalls ein zusätzlicher vertikaler Abstand zwischen der Drehachse 115 der Tragplattform 114 und der Fahrzeugkarosserie 103 gewonnen und so das Eintauchen der Fahrzeugkarosserie 103 ermöglicht wird.

## Patentansprüche

1. Tauchbehandlungsanlage mit
a) mindestens einem Tauchbecken (2), welches mit einer Behandlungsflüssigkeit, insbesondere Lack, füllbar ist, in welche die zu behandelnden Gegenstände (3; 103), insbesondere Fahrzeugkarosserien, eingetaucht werden können;
b) einem Fördersystem (4, 5; 104, 105), welches die zu behandelnden Gegenstände (3; 103) an das Tauchbecken (2) heran, in den Innenraum des Tauchbeckens (2) hinein, aus dem Tauchbecken (2) heraus und von diesem wegbewegen kann und welches mindestens einen in einer Translationsrichtung bewegbaren Transportwagen (5; 105) umfasst, der eine um eine Drehachse (15; 115) verdrehbare Tragplattform (14; 114) aufweist, an der mit Hilfe einer Verbindungsstruktur (18, 19, 20, 21, 22; 118, 119, 120, 121, 122) mindestens ein Gegenstand (3; 103) befestigbar ist;
**dadurch gekennzeichnet, dass**
c) die Verbindungsstruktur (18, 19, 20, 21, 22; 118, 119, 120, 121, 122) so in sich beweglich ist, dass der Gegenstand (3; 103) eine erste, ausgetauchte Position besitzt, in welcher er einen geringst möglichen vertikalen Abstand von der Drehachse (15; 115) besitzt, und dass bei einer Verdrehung aus dieser ersten Position unter dem Einfluss der Schwerkraft ohne zusätzliche motorische Einwirkung zunehmend eine Vergrößerung des vertikalen Abstandes zwischen Gegenstand (3; 103) und Drehachse (15; 115) stattfindet, und dass,
d) der Transportwagen (5; 105) eine durch einen Elektromotor (11; 111) drehbare Antriebsrolle aufweist.

2. Tauchbehandlungsanlage nach Anspruch 1, **dadurch gekennzeichnet, dass** der Gegenstand (3; 103) nach einer Verdrehung um 180° eine zweite Position erreicht, in welcher der er einen maximalen vertikalen Abstand von der Drehachse (15; 115) besitzt.

3. Tauchbehandlungsanlage nach Anspruch 1 oder 2, **dadurch gekennzeichnet, dass** die Verbindungsstruktur mindestens zwei parallele, mit einem ersten Ende gelenkig mit der Tragplattform (14) verbundene Lenker (18) umfasst, die an ihren zweiten Enden gelenkig mit einer Haltestruktur (19) für den Gegenstand (3) so verbunden sind, dass sich mindestens eine Parallelogrammführung ergibt.

4. Tauchbehandlungsanlage nach Anspruch 1 oder 2, **dadurch gekennzeichnet, dass** der Gegenstand (103) von einem ein Grundgerüst (123) aufweisenden Skid (122) getragen ist, wobei die Verbindungsstruktur mindestens zwei parallele, mit einem ersten Ende gelenkig mit dem Grundgerüst (123) des Skids (122) verbundene Lenker (118) umfasst, die an ihren zweiten Enden gelenkig mit einer Haltestruktur (119) für den Gegenstand (103) so verbunden sind, dass sich mindestens eine Parallelogrammführung ergibt.

5. Tauchbehandlungsanlage nach einem der vorhergehenden Ansprüche, **dadurch gekennzeichnet, dass** eine Dämpfungs- oder Bremseinrichtung vorhanden ist, welche die inneren Bewegungen der Verbindungsstruktur (18, 19, 20, 21, 22; 118, 119, 120, 121, 122), die unter dem Einfluss der Schwerkraft ablaufen, kontrolliert.

## Claims

1. An immersion treatment installation having
a) at least one immersion tank (2), which can be filled with a treatment fluid, in particular paint, in which the objects (3; 103) to be treated, in particular vehicle bodies, can be immersed;
b) a conveyor system (4, 5; 104, 105), which can move the objects (3; 103) to be treated towards the immersion tank (2), into the interior of the immersion tank (2), out of the immersion tank (2) and away from the immersion tank (2), and which comprises at least one transport carriage (5; 105), which can be moved in a translatory direction and which has a carrying platform (14; 114), which is rotatable about an axis of rotation (15; 115) and to which at least one object (3; 103) can be fastened with the aid of a connecting structure (18, 19, 20, 21, 22; 118, 119, 120, 121, 122);
**characterised in that**
c) the connecting structure (18, 19, 20, 21, 22; 118, 119, 120, 121, 122) is intrinsically movable such that the object (3; 103) occupies a first non-immersed position, in which it is at the smallest possible vertical distance from the axis of rotation (15; 115), and **in that**, during a rotation from this first position under the influence of gravity without additional motor influence, a progressive increase in the vertical distance between the object (3; 103) and the axis of rotation (15; 115) occurs, and **in that**
d) the transport carriage (5; 105) has a drive roller which can be rotated by an electric motor.

2. The immersion treatment installation according to claim 1, **characterised in that**, after a rotation about 180°, the object (3; 103) reaches a second position in which the it is at a maximum vertical distance from the axis of rotation (15; 115).

3. The immersion treatment installation according to claim 1 or 2, **characterised in that** the connecting structure comprises at least two parallel connecting arms (18), which are connected in articulated manner to the carrying platform (14) by a first end and which are connected in articulated manner to a holding structure (19) for the object (3) at their second ends such that at least one parallelogram guide is produced.

4. The immersion treatment installation according to claim 1 or 2, **characterised in that** the object (103) is carried by a skid (122) having a base frame (123), wherein the connecting structure comprises at least two parallel control arms (118), which are connected in articulated manner to the base frame (123) of the skid (122) by a first end and which are connected to a holding structure (119) for the object (103) at their second ends such that at least one parallelogram guide is produced.

5. The immersion treatment installation according to one of the preceding claims, **characterised in that** a damping or braking device is present, which controls the internal movements of the connecting structure (18, 19, 20, 21, 22; 118, 119, 120, 121, 122) which occur under the influence of gravity.

## Revendications

1. Installation de traitement par immersion comprenant
a) au moins un bassin d'immersion (2) qui peut être rempli avec un liquide de traitement, en particulier de la peinture, dans lequel peuvent être plongés les objets à traiter (3 ; 103), en particulier des carrosseries de véhicules ;
b) un système de transport (4, 5 ; 104, 105) qui peut déplacer les objets à traiter (3 ; 103) jusqu'au bassin d'immersion (2), les plonger dans l'espace intérieur du bassin d'immersion (2), les ressortir du bassin d'immersion (2) et les transporter à l'écart de celui-ci, et qui comprend au moins un chariot de transport (5 ; 105) déplaçable dans une direction de translation, qui présente une plate-forme de support (14 ; 114) pouvant tourner autour d'un axe de rotation (15 ; 115), sur laquelle peut être fixé au moins un objet (3 ; 103) à l'aide d'une structure de liaison (18, 19, 20, 21, 22 ; 118, 119, 120, 121, 122) ;
**caractérisée en ce que**
c) la structure de liaison (18, 19, 20, 21, 22 ; 118, 119, 120, 121, 122) peut être déplacée en soi de telle sorte que l'objet (3 ; 103) possède une première position ressortie dans laquelle il présente une distance verticale aussi faible que possible à l'axe de rotation (15 ; 115), et que dans le cas d'une rotation de cette première position sous l'influence de la force de gravité, sans action supplémentaire d'un moteur, il se produise de manière croissante une augmentation de la distance verticale entre l'objet (3 ; 103) et l'axe de rotation (15 ; 115), et **en ce que**
d) le chariot de transport (5 ; 105) présente un rouleau d'entraînement pouvant être entraîné en rotation par un moteur électrique (11 ; 111).

2. Installation de traitement par immersion selon la revendication 1, **caractérisée en ce que** l'objet (3; 103), après une rotation de 180°, atteint une deuxième position dans laquelle il présente une distance verticale maximale à l'axe de rotation (15 ; 115).

3. Installation de traitement par immersion selon la revendication 1 ou 2, **caractérisée en ce que** la structure de liaison comprend au moins deux bras oscillants parallèles (18), connectés de manière articulée à la plate-forme de support (14) par une première extrémité, lesquels sont connectés de manière articulée à une structure de retenue (19) pour l'objet (3) par leurs deuxièmes extrémités, de telle sorte que l'on obtienne au moins un guidage en parallélogramme.

4. Installation de traitement par immersion selon la revendication 1 ou 2, **caractérisée en ce que** l'objet (103) est porté par un skid (122) présentant une structure de base (123), la structure de liaison comprenant au moins deux bras oscillants parallèles (118) connectés de manière articulée à la structure de base (123) du skid (122) par une première extrémité, lesquels sont connectés de manière articulée à une structure de retenue (119) pour l'objet (103) par leurs deuxièmes extrémités de telle sorte que l'on obtienne au moins un guidage en parallélogramme.

5. Installation de traitement par immersion selon l'une quelconque des revendications précédentes, **caractérisée en ce qu'**il est prévu un système d'amortissement ou de freinage qui contrôle les mouvements intérieurs de la structure de liaison (18, 19, 20, 21, 22 ; 118, 119, 120, 121, 122) qui se produisent sous l'effet de la force de gravité.
